# FASCICULE DE BREVET EUROPEEN

(11) **EP 1 536 166 B1**
(45) Date de publication et mention de la délivrance du brevet: **23.01.2008**
(21) Numéro de dépôt: 04027852.5
(22) Date de dépôt: 24.11.2004
(51) Int. Cl.: F16J 15/08, F02F 11/00

(54) **Joint comprenant une tôle avec une surépaisseur**
Dichtung mit einem verdickten Blech
Gasket comprising a metal sheet with increased thickness

(30) Priorité: 27.11.2003 FR 0350923
(43) Date de publication de la demande: 01.06.2005
(73) Titulaire: Carl Freudenberg KG, 69469 Weinheim (DE)
(72) Inventeur: Ulmer, Georges, 87000 Limoges (FR)

(56) Documents cités:
- EP-A2- 1 298 364
- DE-A1- 10 217 526
- FR-A1- 2 827 637
- US-B1- 6 619 666

## Description

La présente invention se rapporte à un joint, selon le préambule de la revendication 1 notamment un joint de culasse, comprenant une tôle avec une surépaisseur.

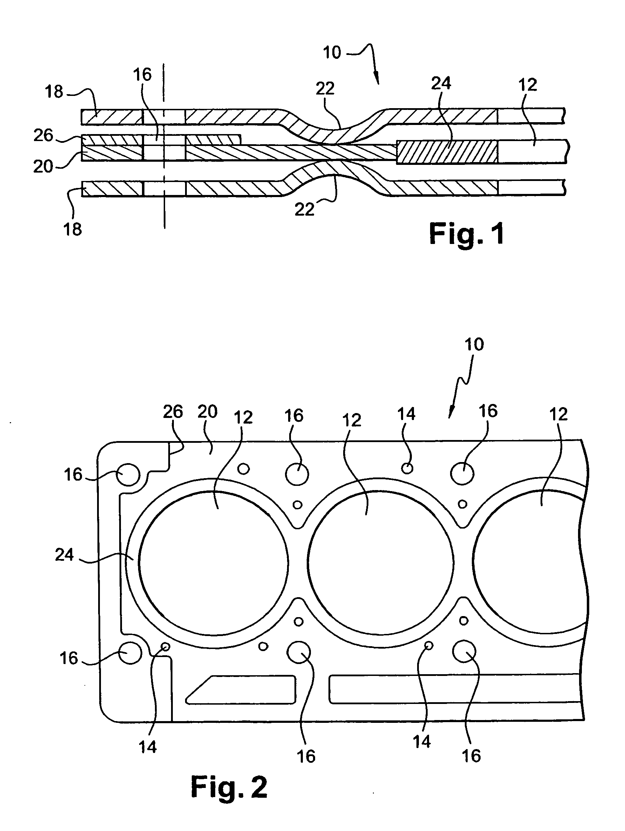

Un joint de culasse est utilisé pour assurer l'étanchéité entre un bloc moteur et une culasse. Comme illustré sur la figure 2, un joint de culasse 10 a généralement la forme du bloc moteur, notamment rectangulaire, et comprend une pluralité d'ouvertures, permettant d'assurer la continuité entre des cavités ou des conduits disposés d'une part dans le bloc moteur, et d'autre part dans la culasse. Ainsi, des premières ouvertures 12 sont prévues pour les chambres à combustion, des deuxièmes ouvertures 14 pour les conduits du ou des fluides de refroidissement et des troisièmes ouvertures 16 pour permettre le passage d'éléments de fixation de la culasse sur le bloc moteur, notamment des tiges filetées. Ainsi, le joint de culasse doit assurer une bonne étanchéité entre les conduits entre eux et entre les conduits et l'extérieur malgré les défauts géométriques des surfaces en contact du bloc moteur et de la culasse et les variations de température.

Selon un mode de réalisation répandu et illustré par la figure 1, un joint de culasse 10 comprend plusieurs feuilles ou tôles empilées, notamment deux tôles extérieures 18 actives entre lesquelles est disposée une tôle intercalaire 20. Au moins l'une des tôles extérieures 18 comporte une nervure 22 autour des premières ouvertures 12, à proximité desdites ouvertures, orientée vers l'intérieur du joint, afin d'obtenir une zone déformable permettant de compenser les déformations du joint. Ainsi, lorsque des nervures 22 sont prévues sur les deux tôles extérieures 18, les parties en saillie desdites nervures sont disposées en vis à vis et orientées l'une vers l'autre ou en opposition.

Pour améliorer l'étanchéité, ledit joint 10 comprend une cale 24 appelée stoppeur, disposée en périphérie des premières ouvertures 12 prévues pour les chambres de combustion et bord à bord avec la tôle intercalaire 20. Ce stoppeur 24 a une épaisseur légèrement supérieure à l'épaisseur de la tôle intercalaire 20 permettant d'une part d'obtenir un effort de serrage plus élevé autour des chambres de combustion, et d'autre part, d'obtenir une précontrainte d'au moins une des tôles extérieures 18 réduisant l'amplitude de débattement et l'écrasement des nervures.

En contrepartie, la présence d'un stoppeur 24 provoque des contraintes mécaniques au niveau des tôles extérieures 18 en raison de l'arc-boutement desdites tôles extérieures au moment du serrage. Par ailleurs, les pressions de contact élevées produites au niveau du stoppeur lors du serrage sont transmises également au bloc moteur et à la culasse provoquant des déformations importantes au niveau des ouvertures des chambres de combustion, susceptibles d'entraîner une augmentation de la consommation d'huile et un niveau sonore de fonctionnement du moteur élevé. Ce phénomène est accentué au niveau des extrémités latérales du joint, les moyens de serrage dans ces zones ne répartissant leurs efforts que sur une ouverture et non sur deux ouvertures pour les autres moyens de serrage.

Aussi, pour résoudre ces problèmes, des surépaisseurs localisées sont prévues au niveau de la tôle intercalaire, dans la zone dite hors gaz c'est-à-dire à l'extérieur des nervures 22, permettant de réduire les contraintes et d'obtenir une pression de serrage homogène sur l'ensemble de la surface du joint.

Selon un mode de réalisation connu et illustré par la figure 1, la surépaisseur est obtenue en rapportant sur la surface de la tôle intercalaire 20 un clinquant 26 ou une tôle mince, d'épaisseur inférieure ou égale à 0,1 mm.

Cette solution n'est pas satisfaisante car la mise en place du clinquant n'est pas aisée, ce dernier étant susceptible de se plier. Par ailleurs, il est nécessaire que le clinquant soit lié mécaniquement à la tôle intercalaire pour jouer pleinement son rôle. Or, la fixation d'un élément extrêmement mince est relativement complexe et coûteuse.

Le document EP-1.298.364 décrit un joint comportant au moins une première ouverture, au moins une tôle dite active avec au moins une nervure ménagée autour de ladite ou desdites premières ouvertures, orientée vers l'intérieur du joint, une surépaisseur appelée stoppeur, disposée en périphérie de ladite ou desdites premières ouvertures et destinée à limiter l'écrasement de la nervure, et une zone de surépaisseur permettant d'équilibrer de part et d'autre de la nervure les contraintes induites par la présence d'un stoppeur, comprenait une pluralité de butées venant en saillie par rapport à au moins une des faces de la tôle intercalaire, chacune desdites butées comprenant une paroi latérale continue et étant obtenue par déformation plastique de la tôle intercalaire de manière à former un élément en saillie sur l'une des faces et une cavité sur l'autre face. Pour limiter l'écrasement des butées, ce document propose une densité d'éléments en saillie supérieure à 50%. Un Joint comprenant une telle densité d'éléments en saillie n'est pas facile à réaliser.

Aussi, la présente invention vise à pallier les inconvénients de l'art antérieur en proposant un joint incorporant une tôle avec au moins une surépaisseur permettant d'équilibrer les contraintes liées à la présence d'un stoppeur, ladite surépaisseur étant obtenue à partir d'un procédé simple.

A cet effet, l'invention a pour objet un joint tel que décrit à la revendication 1.

D'autres caractéristiques et avantages ressortiront de la description qui va suivre de l'invention, description donnée à titre d'exemple uniquement, en regard des dessins annexés sur lesquels:
- la figure 1 est une coupe transversale d'une partie d'un joint de culasse selon l'art antérieur,
- la figure 2 est une vue de dessus d'un joint de culasse selon l'art antérieur,
- la figure 3 est une vue de dessus d'une partie d'une tôle intercalaire avec une surépaisseur selon l'invention,
- les figures 4A, 4B et 4C sont des coupes selon la ligne IV-IV de la figure 3 illustrant la tôle intercalaire selon différentes configurations,
- la figure 5 est une coupe d'une variante d'un joint de culasse incorporant une tôle intercalaire avec une surépaisseur selon l'invention, et
- la figure 6 est une vue de dessus d'un joint de culasse montrant les zones susceptibles d'avoir une surépaisseur selon l'invention.

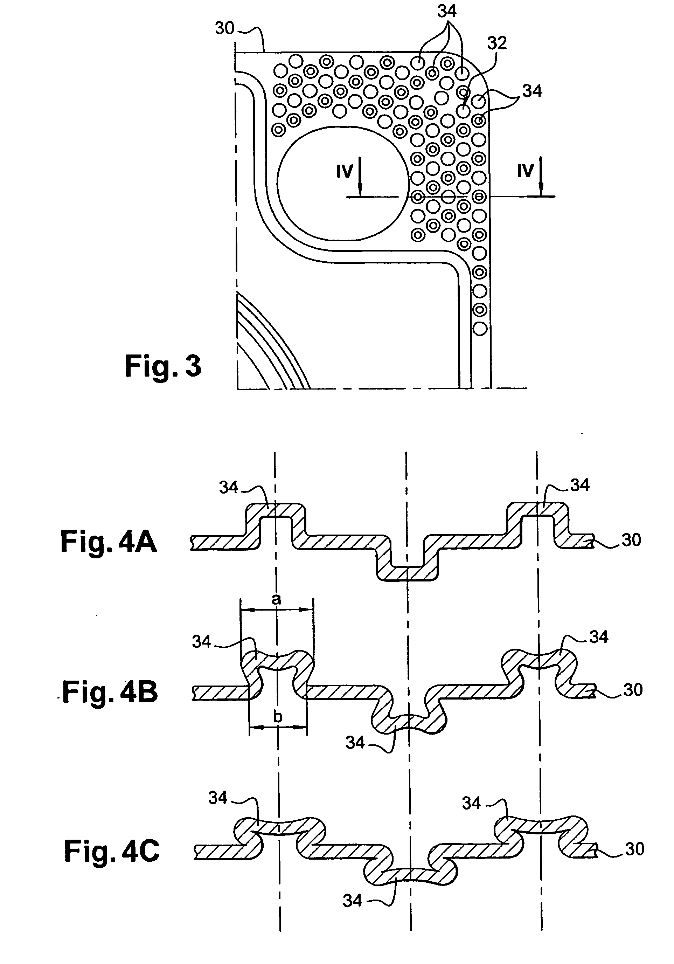

Sur les différentes figures 3, 4A à 4C, on a représenté en 30 une tôle susceptible d'être incorporée dans un joint de culasse comprenant plusieurs feuilles ou tôles empilées, ledit joint étant susceptible d'être interposé entre un bloc moteur et une culasse.

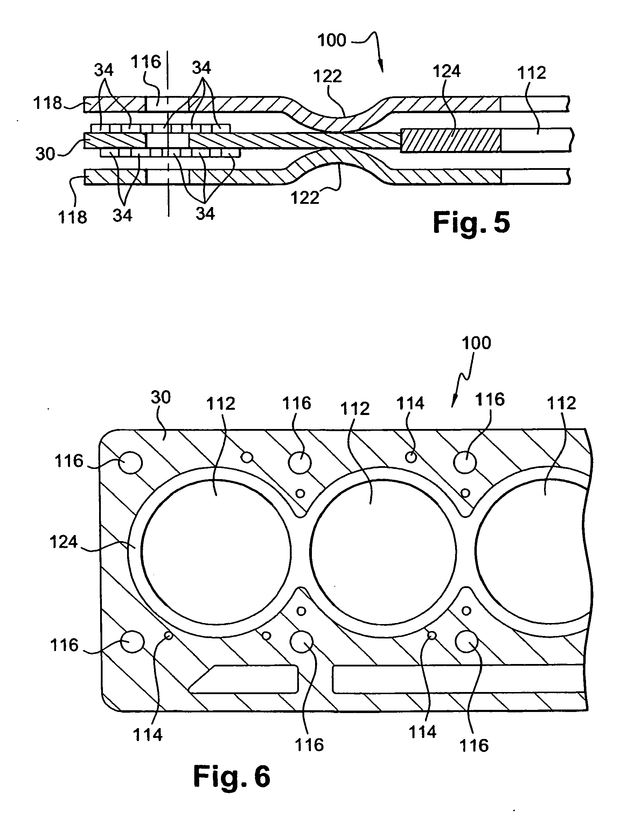

Sur les figures 5 et 6, on a représenté à titre d'exemple un joint de culasse 100 incorporant une tôle 30 selon l'invention en tant que tôle intercalaire. Les éléments communs avec l'art antérieur ont les mêmes références augmentées de 100.

De manière connue, un joint de culasse comprend une pluralité d'ouvertures permettant d'assurer la continuité entre des cavités ou des conduits ménagés dans ledit bloc moteur et ladite culasse.

Ainsi, des premières ouvertures 112 sont prévues pour les chambres à combustion, des deuxièmes ouvertures 114 pour les conduits du ou des fluides de refroidissement et des troisièmes ouvertures 116 pour permettre le passage d'éléments de fixation de la culasse sur le bloc moteur, notamment des tiges filetées.

Le joint de culasse comprend également au moins une tôle extérieure active 118, et de préférence deux entre lesquelles est disposée la tôle intercalaire 30. Au moins l'une des tôles extérieures comporte une nervure 122 autour des premières ouvertures, à proximité desdites ouvertures, orientée vers l'intérieur du joint, afin d'obtenir une zone déformable permettant de compenser les déformations du joint.

Avantageusement, ledit joint comprend une surépaisseur appelée stoppeur 124, disposée en périphérie des ouvertures susceptibles de coïncider avec les chambres de combustion.

La tôle intercalaire 30 comprend des zones de surépaisseur 32 localisées, susceptibles d'être disposées de préférence à l'extérieur des nervures prévues sur les tôles extérieures actives. Avantageusement, ces zones de surépaisseur sont prévues à la périphérie du joint, ainsi qu'autour de chaque ouverture.

Selon l'invention, les zones de surépaisseur 32 comprennent une pluralité de butées 34 obtenues par déformation plastique de la tôle intercalaire 30, venant en saillie par rapport à au moins une des faces de ladite tôle intercalaire 30. Par butée, on entend une déformation plastique formant un élément en saillie sur l'une des faces et une cavité sur l'autre face, ladite cavité comprenant une paroi latérale continue.

Ainsi, contrairement à une rainure qui est délimitée par deux parois latérales et non par une paroi latérale continue, une butée selon l'invention ne peut pas revenir complètement à plat.

Cet agencement permet d'obtenir de manière simple et économique des surépaisseurs sur une tôle, notamment une tôle intercalaire.

Avantageusement, les butées 34 viennent en saillie de part et d'autre de la tôle intercalaire 30, de préférence de manière alternée. Selon les variantes, les butées peuvent avoir des sections de formes variées, notamment circulaire comme illustré sur la figure 3. De plus, en variante, les butées 34 pourraient être débouchantes et sans fond et n'avoir seulement chacune qu'une paroi latérale continue.

Les butées 34 peuvent être disposées au niveau de la ou des surfaces de différentes manières. Ainsi, les butées 34 peuvent être alignées comme illustré sur la figure 3.

La densité de butées 34, à savoir le nombre de butées par unité de surface, est ajustée en fonction de la résistance à l'écrasement souhaitée, cette dernière étant proportionnelle à la densité.

Par résistance à l'écrasement, on entend la capacité d'un élément à s'opposer à la variation de son épaisseur lorsqu'il est soumis notamment à un effort de compression, l'épaisseur correspondant à la valeur dimensionnelle orientée selon l'effort de compression.

Selon un mode de réalisation préféré, les butées 34 sont obtenues par poinçonnage en ayant recours à un ou plusieurs poinçons et une matrice sans jeu.

De préférence, les butées 34 subissent une opération de calibrage, après celle de poinçonnage, pour obtenir une hauteur contrôlée des dépassements desdites butées 34. Préférentiellement, ce dépassement est de l'ordre de 0,4 mm.

Avantageusement, les butées selon l'invention peuvent se déformer lors du serrage de manière plastique et/ou élastique selon au moins une direction sensiblement perpendiculaire au plan de la tôle 30.

Cet agencement permet d'obtenir une surépaisseur 32 dont l'épaisseur est susceptible de s'adapter d'une part aux efforts de serrage, et d'autre part, aux formes des éléments en contact avec ladite surépaisseur.

Selon l'invention, pour obtenir une forte résistance à l'écrasement, les butées 34 subissent une opération de préformage visant à obtenir une section a à l'extrémité des butées 34 supérieure à la section b à la base desdites butées 34. Cette caractéristique permet de limiter l'élasticité de la butées 34, la butée déformée de manière plastique ne pouvant pas retrouver son profil initial tel qu'illustré sur la figure 4A.

Le préformage permet d'obtenir des butées 34 plus ou moins écrasées, comme illustrées sur les figures 4B et 4C, la forme la plus écrasée illustrée à la figure 4C correspondant à la résistance à l'écrasement la plus importante.

Bien entendu, l'invention n'est évidemment pas limitée au mode de réalisation représenté et décrit ci-dessus, mais en couvre au contraire toutes les variantes, notamment en ce qui concerne les formes, dimensions et matériaux des différents éléments et les formes des butées qui peuvent varier en fonction de l'outil de poinçonnage utilisé, sans sortir du cadre de l'invention telle que définie dans les revendications.

Par ailleurs, les zones de surépaisseur sont localisées de manière judicieuse pour permettre de ré-équilibrer les efforts de serrage.

Enfin, cette tôle à surépaisseur localisée n'est pas limitée à l'application décrite et peut convenir à tous les types de joints nécessitant une surépaisseur au niveau d'une tôle.

## Revendications

1. Joint comportant au moins une première ouverture (112), ledit joint comprenant :
- au moins une tôle dite active (118) avec au moins une nervure (122) ménagée autour de ladite ou desdites premières ouvertures (112), orientée vers l'intérieur du joint,
- une tôle intercalaire (30),
- au moins une surépaisseur appelée stoppeur (124), disposée en périphérie de ladite ou desdites premières ouvertures (112) et destinée à limiter l'écrasement de la nervure, et
- au moins une zone de surépaisseur (32) localisée permettant d'équilibrer de part et d'autre de la nervure (122) les contraintes induites par la présence d'un stoppeur, comprenant une pluralité de butées (34) venant en saillie par rapport à au moins une des faces de la tôle intercalaire (30), chacune desdites butées (34) comprenant une paroi latérale continue et étant obtenue par déformation plastique de la tôle intercalaire de manière à former un élément en saillie sur l'une des faces et une cavité sur l'autre face, **caractérisé en ce que** les butées (34) ont une section (a) à l'extrémité supérieure à la section (b) la base.

2. Joint selon la revendication 1, **caractérisé en ce que** la zone de surépaisseur (32) comprend les butées (34) venant en saillie de part et d'autre de la tôle (30), de préférence de manière alternée.

3. Joint selon la revendication 1 ou 2, **caractérisé en ce que** les butées (34) peuvent se déformer de manière plastique et/ou élastique selon au moins une direction sensiblement perpendiculaire au plan de la tôle (30).

## Claims

1. Gasket having at least one first opening (112), the said gasket comprising:
- at least one "active" plate (118) with at least one rib (122) formed around the said first opening or openings (112) and oriented to the inside of the gasket,
- an insert plate (30),
- at least one increased thickness, termed stopper (124), arranged at the periphery of the said first opening or openings (112) and intended to limit the crushing of the rib, and
- at least one localized increased thickness region (32) which makes it possible, on either side of the rib (122), to balance the stresses induced by the presence of a stopper, comprising a plurality of stops (34) which project with respect to at least one of the faces of the insert plate (30), each of the said stops (34) comprising a continuous lateral wall and being obtained by plastic deformation of the insert plate so as to form a projecting element on one of the faces and a cavity on the other face, **characterized in that** the stops (34) have a cross section (a) at the end that is larger than the cross section (b) at the base.

2. Gasket according to Claim 1, **characterized in that** the increased thickness region (32) comprises the stops (34) projecting on either side of the plate (30), preferably in an alternating manner.

3. Gasket according to Claim 1 or 2, **characterized in that** the stops (34) can deform plastically and/or elastically in at least one direction which is substantially perpendicular to the plane of the plate (30).

## Patentansprüche

1. Dichtung mit mindestens einer ersten Öffnung (112), umfassend:
- mindestens ein so genanntes aktives Blech (118) mit mindestens einer Rippe (122), die um die erste oder ersten Öffnung(en) (112) zum Dichtungsinneren gerichtet vorgesehen ist,
- ein Zwischenblech (30),
- mindestens eine Stopper (124) genannte Verdickung, die am Umfang der ersten Öffnung(en) (112) angeordnet ist und das Zusammendrücken der Rippe einschränken soll, und
- mindestens einen örtlich begrenzten Verdickungsbereich (32), der auf beiden Seiten der Rippe (122) die durch das Vorhandensein eines Stoppers verursachten Spannungen ausgleichen kann, mehrere Anschläge (34) umfassend, die in Bezug auf mindestens eine der Flächen des Zwischenblechs (30) hervorstehen, wobei jeder der Anschläge (34) eine kontinuierliche Seitenwand aufweist und die durch plastische Verformung des Zwischenblechs derart erhalten wird, dass ein hervorstehendes Element auf einer der Flächen und ein Hohlraum auf der anderen Fläche gebildet wird, **dadurch gekennzeichnet, dass** die Anschläge (34) einen Abschnitt (a) am Ende oberhalb des Abschnitts (b) auf der Basis aufweisen.

2. Dichtung nach Anspruch 1, **dadurch gekennzeichnet, dass** der Verdickungsbereich (32) die Anschläge (34) umfasst, die auf beiden Seiten des Blechs (30) vorzugsweise abwechselnd hervorstehen.

3. Dichtung nach Anspruch 1 oder 2, **dadurch gekennzeichnet, dass** sich die Anschläge (34) auf plastische und/oder elastische Weise in mindestens einer Richtung, die im Wesentlichen senkrecht zur Blechebene (30) ist, verformen können.
